# EUROPEAN PATENT APPLICATION

(11) **EP 1 980 191 A1**
(43) Date of publication of application: **15.10.2008**
(21) Application number: 07706456.6
(22) Date of filing: 10.01.2007
(51) Int. Cl.: A47L 13/17, A47K 7/00, B32B 5/26, D04H 1/40

(54) **SHEET-LIKE WATER-DISINTEGRATABLE CLEANER**

(30) Priority: 16.01.2006 JP 2006006844
(71) Applicant: Kinsei Seishi Co., Ltd., Kochi-shi, Kochi 780-0921 (JP)
(72) Inventor: YASUMITSU, Yasuji, Kochi 780-0921 (JP); CHIKAMORI, Kazuyuki, Kochi 780-0921 (JP); MATSUMOTO, Akira, Koichi 780-0921 (JP); YAMAZAKI, Yasuyuki, Koichi 780-0921 (JP)
(74) Representative: Henkel, Feiler & Hänzel
(86) International application number: PCT/JP2007/050109
(87) International publication number: WO 2007/080860

(57) **Abstract**

There is provided a water-disintegratable cleaner which is light in weight because of its being free from water, does not require a fungicide or a bactericide because of no risk of mold, is excellent in cleaning performance, compared to conventional wet disintegratable cleaners, and can be flushed down a toilet or the like.

A sheet-like water-disintegratable cleaner having a total basis weight of 10 to 250 g/m² in which a web layer (ii) having a basis weight of 5 to 200 g/m² produced by an air-laid process, which comprises 100 to 5% by weight of a powdery organic acid (a) having a hydroxyl group and a melting point of 70 to 160°C and 0 to 95% by weight of cellulosic pulp (b) (with the proviso that (a)+(b)=100% by weight) as main components, is laminated on water-disintegratable paper (i) having a basis weight of 5 to 25 g/m² comprising cellulosic pulp as a main component, and the same water-disintegratable paper (iii) as the above (i) is further laminated on the web layer (ii) as needed. A binder component (c) may be further incorporated in the web layer (ii).

## Description

### Technical Field

The present invention relates to a sheet-like waterdisintegratable cleaner, and more particularly to a sheet-like water-disintegratable cleaner which is safe to human and the global environment, because a specific non-surfactant organic acid is used as a cleaning agent, and has a practically sufficient washing action.

### Background Art

When kitchens, floors of bathrooms and toilets, further, sinks, cooking ranges, grills, toilet instruments, ventilating fans and the like are cleaned, the cleaning has hitherto been done using cleaning sheets (such as floor cloths and sponges) allowed to contain water, to which solid cleaning agents or liquid cleaning agents are attached, in many cases. However, in the case of using such conventional cleaning sheets, there has been a disadvantage that the cleaning agents must be attached in each case.

Further, for example, patent document 1 (Japanese patent No. 3,556,415) proposes water-disintegratable paper for cleaning in which nonwoven fabric or paper containing a binder such as hydroxypropylmethylcellulose phthalate is impregnated with a pH buffer solution adjusted to the acidic pH side.
Such a cleaning sheet having water disintegratability has merits that it can be used as it is, because water is previously kept therein, and moreover, that it can be flushed down a toilet after use. However, it is in a wet state, so that storage for a long period of time causes the occurrence of mold in some cases.
As a measure thereto, a fungicide or a bactericide is introduced therein. Accordingly, this remains a long way from being a cleaner friendly to human.
Further, some of these wet commercial products contain a synthetic surfactant for washing, and therefore are unfriendly to human and the environment.
Furthermore, each of these wet commercial products contains water of about twice that of a substrate such as paper or nonwoven fabric, so that the weight is heavy, the transport cost comes expensive, and further, in order to prevent leakage and drying, a sealing system is required for packaging, resulting in an expensive product.
[Patent Document] Japanese patent No. 3,556,415

### Disclosure of the Invention

### Problems That the Invention Is to Solve

An object of the present invention is to provide a water-disintegratable cleaner which is light in weight because of its being free from water, does not require a fungicide or a bactericide because of no risk of mold, is excellent in cleaning performance, compared to conventional wet disintegratable cleaners, and can be flushed down a toilet or the like.

### Means for Solving the Problems

The present invention relates to a sheet-like waterdisintegratable cleaner having a total basis weight of 10 to 250 g/m² in which a web layer (ii) having a basis weight of 5 to 200 g/m² produced by an air-laid process, which comprises 100 to 5% by weight of a powdery organic acid (a) having a hydroxyl group and a melting point of 70 to 160°C and 0 to 95% by weight of cellulosic pulp (b) (with the proviso that (a)+(b)=100% by weight) as main components, is laminated on water-disintegratable paper (i) having a basis weight of 5 to 25 g/m² comprising cellulosic pulp as a main component, and the same water-disintegratable paper (iii) as the above (i) is further laminated on the web layer (ii) as needed.

### Advantages of the Invention

The sheet-like water-disintegratable cleaner of the present invention is dry and free from water, so that it is light in weight to lead to a reduction in cost of distribution and storage. Further, there is no risk of mold, so that it does not require the addition of a fungicide or a bactericide. Furthermore, it contains an organic acid such as citric acid as a cleaning agent and contains no surfactant, so that it is friendly to the human body and the environment, and safe. Moreover, the effect of the organic acid such as citric acid can be exhibited to domestic dirt such as soap scum, toilet dirt and oily dirt. In addition, it has water disintegratability, so that it can be easily flushed down a toilet.

### Best Mode for Carrying Out the Invention

### Water-Disintegratable Paper (i) (Substrate Sheet)

Water-disintegratable paper (i) used in the sheet-like water-disintegratable cleaner of the present invention collectively means paper having a property that adhesive force between fibers constituting paper has a minimum strength necessary for functions such as forming processing and wiping in a dry state, whereas in a wet state in which the paper is immersed in water, the adhesive force substantially decreases to easily decompose or disperse upon application of outer force of some kind.
The above-mentioned water-disintegratable paper used in the present invention mainly comprises cellulosic pulp, and about 10% by weight or less of a heat-adhesive synthetic fiber described later or another fiber, for example, a fibrous material such as nonwoody plant fiber, rayon fiber, polyester fiber or polyamide fiber may be contained therein.
Here, as the cellulosic pulp constituting the main component of the water-disintegratable paper (i) or (iii) of the present invention, there can be used nonwoody pulp such as linter pulp and bagasse and the like, as well as wood pulp.

The water-disintegratable paper used in the present invention is produced by a wet process, a dry process or the like, using the above cellulosic pulp, further, another fibrous material as needed, and a paper strength additive comprising a natural polymer and/or a synthetic polymer.
As the paper strength additive used herein, a polymer having a carboxyl group as an anion group is preferred in terms of wet strength and water disintegratability of the waterdisintegratable paper. In addition, a polymer having a sulfone group or a phosphoric acid group as an anion can also be used. As the carboxyl group-containing polymer, carboxymethylcellulose is preferred. However, polyacrylic acid, polymethacrylic acid, polymaleic acid or a copolymer with a monomer copolymerizable therewith can also be used. Counter ions of the anion group-containing polymers include metal ions such as an alkali metal, an alkali earth metal, manganese, cobalt, zinc and nickel. In addition, a polyacrylamide-based resin, a melamine-based resin, a (meth) acrylic acid ester-based resin, a vinyl acetate-based resin or the like is used as the paper strength additive.
The amount of the paper strength additive added to the water-disintegratable paper (i) or (iii) is from 0.01 to 0.5% by weight, and preferably from 0.02 to 0.2% by weight, based on the cellulosic pulp (and the other fibrous material) in terms of solid content. In the case of less than 0.01% by weight, when used as the cleaner, it immediately becomes weak to cause a tendency to lose shape. Accordingly, it can not be practically used. On the other hand, exceeding 0.5% by weight results in a fear of a decrease in water disintegratability at the time when immersed in water.

The water-disintegratable paper thus obtained may be used as it is, or may be subjected to calendering or embossing. The basis weight (including the amount of the paper strength additive) of the water-disintegratable paper (i) or (iii) used in the invention is from 5 to 25 g/m², and preferably from 8 to 20 g/m². In the case of less than 5 g/m², a powdery organic acid (b) present in a web layer (ii) is not trapped by the water-disintegratable paper (i) or (iii) to fall off, and the strength of the water-disintegratable paper also decreases, which is liable to cause a trouble such as breakage in practical use. On the other hand, exceeding 25 g/m² results in not only a tendency to fail to secure sufficient air permeability necessary as a substrate of an air-laid process, but also too long a time taken to elute the powdery organic acid (b) from the web layer (ii), which leads to lack of practicality.

### Formation of Web Layer (ii) and Lamination Integration

Then, the web layer (ii) containing the above-mentioned powdery organic acid (a) and further the cellulosic pulp (b) (and the binder component (c)) as needed is formed on the water-disintegratable paper (i) as the above-mentioned substrate sheet by the air-laid process. That is to say, the powdery organic acid (a), a mixture of the component (a) and the cellulosic pulp (b), or a mixture thereof with the above-mentioned component (c) is blasted from a single blast portion or multiple blast portions positioned over a porous net conveyer to form the web layer (ii) on the net conveyer while sucking with an air suction portion arranged under the net conveyer. At this time, the water-disintegratable paper (i) forming the substrate sheet is previously laid on the net conveyor, thereby obtaining a laminated body at once. Then, interfiber bonding of the air-laid layer and heat adhesion thereof to the substrate are formed by hot air treatment and/or hot pressing calendering treatment to achieve integration as a nonwoven fabric sheet.
In this case, when the cellulosic pulp (b) (and the component (c)) is mixed together in the web layer (ii), advantages of fixing the powdery organic acid (a) and preventing it from falling off, improving interlayer peeling strength, and the like can be expected.

Here, when the cleaner of the present invention is actually used, the powdery organic acid (a) is not only a component which is dissolved in water and acts as functions of penetration, separation and dissolution, a reduction function (rust removal) and a function of neutralizing alkaline dirt, to dirt stuck to surfaces of domestic instruments and equipments (soap scum or oily scum of baths, wash-basins and the like, water scale (mainly hard white crystals of calcium carbonate and the like), scum of excretory substances in toilets (mainly relatively hard brown crystals composed of calcium phosphate and the like), food scum on kitchen sinks and the like, and the like), but also a component which is expected to have an antibacterial effect and an effect of eliminating bad odors.
The organic acid (a) is a hydroxy acid having a hydroxyl group and a melting point of 70 to 160°C. The organic acid (a) has a hydroxyl group in its molecule, thereby being excellent in solubility. This becomes an essential item when the resulting cleaner is wetted with water to use. Further, the melting point of the organic acid (a) is from 70 to 160°C. In the case of lower than 70°C, there unfavorably occurs a trouble of fusing to melt out or exude during transportation and storage in some cases. On the other hand, exceeding 160°C results in lack of the speed of dissolution in water, which leads to lack of practicality.
Specific examples of the organic acids (a) include malic acid (melting point=99°C) and tartaric acid (melting point=170°C) as a dibasic acid, citric acid (fusion temperature of crystallization water type=about 100°C, melting point of anhydrous type=153°C) as a tribasic acid, gluconolactone, salts thereof and the like. The powdery organic acid (c) used in the present invention is not limited to the above ones, and may be any, as long as it is an organic acid having a hydroxyl group and a melting point of 70 to 160°C.
The average particle size of the organic acid (a) is from 0.1 to 1 mm, and preferably from 0.2 to 0.8 mm. When it is less than 0.1 mm, the organic acid (a) passed through apertures of the water-disintegratable paper (i) and (iii) as front-back layers to come to easily fall off. On the other hand, when it exceeds 1 mm, the organic acid (a) comes to easily fall off during transportation and storage of the resulting cleaner.
The basis weight , containing weight, of the organic acid (a) in the web layer (ii) is preferably from 1 to 50 g/m², and more preferably from 5 to 40 g/m². Too small results in a poor cleaning effect, whereas too large unfavorably results in easy falling-off and moreover in stronger irritation to the human skin at the time when the cleaner is used.

Further, the cellulosic pulp (b) which may be used in the web layer (ii) has a function of retaining the powdery organic acid (a) in forming the web layer and absorbing and retaining water in actually using the cleaner.
As the cellulosic pulp (b), there is used the same cellulosic pulp as used in the water-disintegratable paper (i) and (iii).
The basis weight of the cellulosic pulp (b) in the web layer (ii) is from 0 to 100 g/m², and preferably from 10 to 100 g/m². That is to say, even when no cellulosic pulp (b) is contained in the web layer (ii), there is no disadvantage for absorption and retention of water as the whole cleaner at the time of actual use because of the presence of the waterdisintegratable paper (i) and (iii). On the other hand, when the component (b) exceeds 100 g/m², the ratio of the powdery organic acid (a) relatively decreases to results in a poor cleaning effect of the cleaner of the present invention.

The web layer (ii) may further contain at least one binder component (c) selected from the group consisting of the above-mentioned heat-adhesive synthetic fiber, polyolefinic synthetic pulp, a powder of a low-melting resin and a water-soluble resin, in addition to the above-mentioned component (a) alone or the mixed system of the components (a) and (b).
The above-mentioned component (c) acts as a binder in the web layer (ii).

Of the components (c), as the heat-adhesive synthetic fiber, suitable is a heat-adhesive composite fiber. Examples thereof include a sheath-core type in which a low-melting component is used as a sheath component, and a high-melting component is used as a core component, a side-by-side type in which one is a low-melting component, and the other is a high-melting component, and the like. Combinations of both components of these composite fibers include PP (polypropylene)/PE (polyethylene), PET (polyethylene terephthalate)/PE, PP/low-melting copolymerized PP, PET/lowmelting copolymerized polyester and the like. Examples of the above-mentioned low-melting copolymerized polyesters as used herein include a modified copolymer of polyethylene terephthalate, polypropylene terephthalate, polybutylene terephthalate or the like as a basic skeleton with an aromatic dicarboxylic acid such as isophthalic acid or 5-metal isophthalate, an aliphatic dicarboxylic acid such as adipic acid or sebacic acid, an aliphatic polyhydric alcohol such as diethylene glycol, propylene glycol or 1,4-butanediol, or the like.

The melting point of the heat-adhesive component as the low-melting component is usually from 110 to 160°C, and preferably from 120 to 155°C. In the case of less than 110°C, heat resistance as a nonwoven fabric is low, which leads to lack of practicality in cleaning in the case of a relatively high temperature such as kitchens, particularly cooking ranges and grills. On the other hand, exceeding 160°C causes necessity to increase the heat treatment temperature in a nonwoven fabric production process, resulting in not only a decrease in productivity, which is unpractical, but also a tendency of thermal deterioration and strength deterioration of the pulp (b) in the water-disintegratable paper (i) or the web layer (ii) to occur. This is therefore unfavorable.

The fineness of the heat-adhesive synthetic fiber is from 1.5 to 50 dtex, and preferably from 1.7 to 40 dtex. In the case of less than 1.5 dtex, when the web is formed by the air-laid process, fine fibers tend to entangle with one another, and mixing with other fibers becomes difficult, resulting in not only an increase in the risk of the unevenness of texture or massive defects to occur, but also too long a time taken to elute the organic acid from the web layer, which leads to lack of practicality.
In the case of thick fibers, washing and a dirt scraping function increase. On the other hand, in the case of very thick fibers exceeding 50 dtex, the number of fibers decreases even at the same mixing ratio, so that the above-mentioned advantages of preventing the organic acid powder from falling off, imparting sheet strength, imparting heat sealing properties, and the like recede.
Since the production method of the web layer (ii) is the air-laid process, the fiber length of the heat-adhesive synthetic fibers is preferably from 2 to 15 mm, and more preferably from 3 to 10 mm. When the fiber length is less than 2 mm, the advantage of an increase in strength and the like is insufficient. On the other hand, exceeding 15 mm results in a tendency of the fibers to entangle with one another, being liable to lead to deterioration of processability and texture.

The heat-adhesive synthetic fibers may contain various additives or may be surface treated therewith. Examples thereof include a colorant, a bactericide, a deodorant, an aromatic agent, a fungicide, a hydrophilizing agent and the like.

The heat-adhesive synthetic fibers may be either crimped or not, or may be strand chops. When crimped, both of a zigzag-shaped two-dimensionally crimped fiber and a spiral-shaped or ohm-shaped three-dimensionally (sterically) crimped fiber can be used.

As a fiber other than these fibers, there may be mixed, for example, PP fiber, PET fiber, PBT fiber, nylon 6 fiber, nylon 66 fiber, aromatic polyamide fiber, acrylic fiber, hemp, rayon, viscose fiber or the like, within the range not impairing the spirit and effect of the present invention. In this case, it is preferred that the ratio of the other fiber is confined to less than 30% by weight. Thirty percent or more by weight results in not only an influence on nonwoven fabric strength or heat-sealing properties, but also easy falling-off of fibers having no heat adhesiveness in practical use.

Of the components (c), the polyolefinic synthetic pulp is obtained, for example, by discharging a dispersion comprising a polyolefin in a high-temperature, high-pressure state, a solvent for a polymer selected from an aliphatic hydrocarbon and/or an aromatic hydrocarbon having a boiling point lower than that of water, and water, in which all solvents are substantially evaporated when rapidly discharged into a reduced-pressure region, and which is at a temperature at which substantial evaporation of water does not occur, into a reduced-pressure region through a nozzle, recovering the polyolefin as a fibrous material dispersed in water, and beating or refining the fibrous material dispersed in water in a state where a surfactant is mixed. The production method of this polyolefinic synthetic pulp is described in detail, for example, in claims and column 3, line 5 to column 19, line 25 of JP-B-52-47049.
The polyolefinic synthetic pulp having an average fiber length of 0.5 to 3 mm and an average fiber diameter of 1 to 100 µm can be suitably used.
Commercial products of this polyolefinic synthetic pulp include SWP E790, E400, EST-8, E620, UL410, NL490, AU690, Y600, ESS-5, ESS-2, E380, E780, E90, UL415 and the like manufactured by Mitsui Chemicals, Inc.
The polyolefinic synthetic pulp has a multi-branched fibrous structure (fibrillated to have multiple branches and a high specific area), so that it is characterized by excellent trapping performance of the powdery organic acid (a). Further, when blown on the above-mentioned substrate sheet by the air-laid process, the web layer in which the polyolefinic synthetic pulp (c) and the powdery organic acid (a) are blended with each other in an air stream is uniformly placed on the water-disintegratable paper (i).

Further, the powders of the low-melting resins constituting the component (c) include polyethylene, polypropylene, a polyvinyl chloride-based resin, polyvinyl acetate, an acrylic acid ester-based resin, an ethylene-vinyl acetate copolymer, a low-melting polyester, a low-melting polyamide, an ionomer resin and the like.
In the above-mentioned low-melting resin powder, the average particle size is from 0.1 to 1 mm, and preferably from 0.2 to 0.8 mm. Less than 0.1 mm results in easy falling-off through apertures of the water-disintegratable paper (i) in the production process, whereas exceeding 1 mm results in easy falling-off from between the layer (i) and the layer (iii).

Further, the water-soluble resins constituting the component (c) include polyvinyl alcohol, carboxymethylcellulose and a derivative thereof, a water-soluble size, starch and the like. These water-soluble resins may be either in a powder form or in a fibrous form, and their configuration is not limited.

The ratio of the component (c) used in the web layer (ii) described above is preferably from 0 to 10% by weight, and more preferably from 1 to 10% by weight. Even when no component (c) is contained, there is little practical disadvantage. However, it is preferably 1% or more by weight for preventing interlayer peeling of the web layer (ii) or preventing the organic acid (a) and the pulp (b) from falling off. When it exceeds 10% by weight, the effect as the binder component is too strong, so that the resulting cleaner has a fear of losing water disintegratability.

In the web layer (ii), for the compounding ratios of the components (a) and (b), the powdery organic acid (a) is from 100 to 5% by weight, and the cellulosic pulp (b) is from 0 to 95% by weight (with the proviso that (a)+(b)=100% by weight).
Further, when the binder component (c) is further added in addition to the components (a) and (b), preferably, the component (a) is from 5 to 50% by weight, the component (b) is from 40 to 94% by weight, and the component (c) is from 1 to 10% by weight (with the proviso that (a)+(b)+(c)=100% by weight).
In the web layer (ii) of the present invention, too small the compounding ratio of the powdery organic acid (a) results in the poor cleaning effect of the resulting cleaner. On the other hand, too large the compounding ratio of the component (b) or (c) unfavorably results in poor water disintegratability of the resulting cleaner.

In the above-mentioned web layer (ii) formed by the air-laid process, the basis weight is usually from 5 to 200 g/m², and preferably from 8 to 150 g/m². In the case of less than 5 g/m², the cleaning and washing effects are poor, and nonwoven fabric strength and water retention properties are also decreased. This is therefore unfavorable. On the other hand, when it exceeds 200 g/m², the layer thickness becomes too thick, resulting in lack of flexibility, and further, it becomes difficult to form the uniform web by the air-laid process. This is therefore unfavorable.
In the air-laid process for producing the web layer (ii) of the present invention, fibers easily dissociated to single fibers by airflow and short in length can be used, compared to an existing dry nonwoven fabric production process such as a card process. Accordingly, the air-laid process has a characteristic that there is obtained a nonwoven fabric having extremely good texture, namely having good uniformity. Moreover, it is possible to form the web at once while mixing the powder, so that this process is suitable for the present invention. In use for the sheet for washing, uniformity is an important requirement for performance of being small in powder leakage and large in the washing effect, and is hard to be obtained by an existing card process nonwoven fabric, spun bond nonwoven fabric and melt blow nonwoven fabric. Further, according to this production method, the nonwoven fabric also has a merit that the longitudinal/lateral strength ratio is approximately close to 1/1.

### Water-Disintegratable Paper (iii) (Upper Layer Sheet)

In the sheet-like water-disintegratable cleaner of the present invention, it is preferred that the waterdisintegratable paper (iii) is further laminated on the web layer (ii), in order to more prevent the powder of the organic acid (a) present in the above-mentioned web layer from falling off and to enhance functions such as surface strength.
The water-disintegratable paper (iii) forming the upper sheet include the same one as the water-disintegratable paper (i) forming the above-mentioned substrate sheet.

The total basis weight of the sheet-like waterdisintegratable cleaner of the present invention comprising (ii)/(i) or (iii)/(ii)/(i) described above is from 10 to 250 g/m², and preferably from 20 to 200 g/m². Less than 10 g/m² results in a poor cleaning effect and low strength, so that it is difficult to be put to practical use. On the other hand, in the case of a high basis weight exceeding 250 g/m², the cleaning effect seldom proportionally increases, the water disintegratability deteriorates, and the production cost increases, which leads to lack of merchantability.

### Heat Treatment

In the sheet-like water-disintegratable cleaner of the present invention, it is preferred that the nonwoven fabric laminated body obtained as described above is heat treated. The heat treatment includes hot air treatment and/or hot pressing treatment.
Of these, as for the hot air treatment for forming interfiber bonds, when the binder component (c) is incorporated in the above-mentioned web layer (ii), there is necessary a temperature equal to or higher than the melting point of the component (c). However, when the temperature is at least 30°C higher than the melting point of the component (c), thermal shrinkage of the component (c) is liable to become large, which causes deterioration of texture, and deterioration of the component (c) in an extreme case. This is therefore unfavorable.
The hot air treatment temperature is usually from 110 to 190°C, and preferably from 120 to 175°C.

Further, after the hot air treatment has been conducted, the hot pressing treatment, specifically hot pressing calendering treatment, may be applied. As rollers used for the calendering treatment, a pair of metal rollers having a smooth surface or a combination of a metal roller and an elastic roller is preferably used, in order to apply uniform hot pressing over all. However, multistage rollers may be used. Furthermore, embossed rollers having an uneven surface may also be used within the range not impairing the spirit of the present invention.

In the case of the calendering treatment, pressurization is performed at any temperature ranging from ordinary temperature (not heated) to high temperature, when it is only for thickness adjustment. The pressure can be appropriately adjusted so as to give a desired thickness. In order to improve strength, surface wear resistance, interlayer peeling prevention and the like by reinforcing interfiber thermal bonding by a hot pressing calender, the temperature of a roller surface is required to be a temperature equal to or higher than the melting point of the component (c). However, when it is at least 30°C higher than the melting point of the component (c), not only thermal shrinkage of the component (c) is liable to become large, but also adhesion to the roller surface occurs, resulting in lack of processability. In case of less than the melting point, the reinforcement of interfiber bonding becomes insufficient, as a matter of course.
The heat treatment temperature in the case of reinforcing interfiber bonding is usually from 110 to 190°C, and preferably from 120 to 175°C.

Further, as the line pressure of the calendering treatment, any pressure can be selected, as long as it is set so that a uniform line pressure is obtained in the width direction. In the case of high pressure, the density, nonwoven fabric strength and interlayer strength increase, and the thickness decrease. In the case of low pressure, the influence contrary thereto is of course exerted. When importance is attached to the nonwoven fabric strength, a pressure as high as possible is preferred. When importance is attached to flexibility, a lower pressure is preferred. Usually, the line pressure of the calendering treatment can be arbitrarily selected within the range of 5 to 100 kgf/cm. Further, any clearance may be provided between the pair of rollers.

In addition, the thickness of the resulting sheet-like water-disintegratable cleaner of the present invention is usually from 0.5 to 10 mm, and preferably from 0.7 to 7 mm. However, it can be set depending on the basis weight (5 to 200 g/m²) of the web layer (ii) and its use.

The present invention will be described in more detail with reference to the following examples, but should not be construed as being limited thereto.

### Example 1

As a water-disintegratable paper (i) (substrate sheet), there was used a product with a basis weight of 20 g/m² comprising wood pulp NBKP manufactured by Shikoku Tokushi Co. , Ltd. Then, a 50/5 (weight ratio) mixture of crushed pulp/powdery citric acid (manufactured by Fuso Chemical Co., Ltd., purified citric acid crystal type) was blown by the air-laid process on the above-mentioned water-disintegratable paper (i) placed on a moving net of an air-laid apparatus to form a web layer (ii) having a basis weight of 55 g/m². Further, a waterdisintegratable paper (iii) similar to the above-mentioned water-disintegratable paper (i) was laminated thereon in line as an upper layer to form a sheet-like material having a total basis weight of 95 g/m². This sheet-like material was previously preheated at 120°C for 2 minutes, and then, subsequently subjected to calendering at 60°C and a line pressure of 10 kgf/cm to produce a sheet-like waterdisintegratable cleaner having a thickness of 0.7 mm. The resulting cleaner was cut out to a size 30 cm long and 20 mm wide, folded into four, and wetted with water to use for cleaning of a household bath. As a result, slime and dirt in the inside thereof could be cleaned up without any synthetic detergent. In handling such as storage and transportation, falling-off of the powder of the organic acid (a) contained was very little.
The used cleaner was disintegrated immediately after flushed down a toilet, and caused no pipe clogging.

### Example 2

As a water-disintegratable paper (i) (substrate sheet), there was used the same paper as in Example 1 with the exception that the basis weight thereof was 15 g/m². Then, a 60/5/5 (weight ratio) mixture of crushed pulp/powdery citric acid (manufactured by Fuso Chemical Co., Ltd., purified citric acid anhydrous type)/heat-adhesive composite fiber (manufactured by Chisso Polypro Fiber Co., Ltd., PP/PE core-sheath type composite fiber, 1.7 dtex×5 mm) was blown by the air-laid process on the above-mentioned water-disintegratable paper (i) placed on a moving net of an air-laid apparatus to form a web layer (ii) having a basis weight of 70 g/m². Further, a waterdisintegratable paper (iii) similar to the above-mentioned water-disintegratable paper (i) was laminated thereon in line as an upper layer to form a sheet-like material having a total basis weight of 100 g/m². Subsequently, this sheet-like material was heated in a hot air suction heating furnace of 138°C for 2 minutes to integrate it, and further, subsequently subjected to calendering at 40°C and a line pressure of 20 kgf/cm to produce a sheet-like water-disintegratable cleaner having a thickness of 0.6 mm. The resulting cleaner was cut out to a size 30 cm long and 20 mm wide, folded into four, and wetted with water to use for cleaning of a cooking sink. As a result, dirt could be cleaned up. The same was also used for cleaning of a toilet bowl, and dirt could also be cleaned up.
In handling such as storage and transportation, falling-off of the powder of the organic acid (a) contained was very little.
The used cleaner was disintegrated immediately after flushed down a toilet, and caused no pipe clogging.

### Comparative Example 1

As a water-disintegratable paper (i) (substrate sheet), there was used the same paper as in Example 2 (basis weight: 15 g/m²). Then, a 60/5 (weight ratio) mixture of crushed pulp/heat-adhesive composite fiber (the same as in Example 2) was blown by the air-laid process on the above-mentioned waterdisintegratable paper (i) placed on a moving net of an air-laid apparatus to form a web layer (ii) having a basis weight of 65 g/m². Further, a water-disintegratable paper (iii) similar to the above-mentioned water-disintegratable paper (i) was laminated thereon in line as an upper layer to form a sheet-like material having a total basis weight of 95 g/m². Subsequently, this sheet-like material was heated in a hot air suction heating furnace of 138°C for 2 minutes to integrate it, and further, subsequently subjected to calendering at 60°C and a line pressure of 15 kgf/cm to produce a sheet-like waterdisintegratable cleaner having a thickness of 0.6 mm. The resulting cleaner was cut out to a size 30 cm long and 20 mm wide, wetted with water, and used for cleaning of a toilet bowl. However, dirt of minute aggregated excretion stuck was not removed well, because no citric acid was incorporated in the web layer (ii).
The used cleaner was disintegrated immediately after flushed down a toilet, and caused no pipe clogging.

### Industrial Applicability

The sheet-like water-disintegratable cleaner of the present invention is light in weight because of its being free from water, does not require a fungicide or a bactericide because of no risk of mold, is excellent in cleaning performance, compared to conventional wet disintegratable cleaners, can be flushed down a toilet or the like, and moreover, contains no synthetic surfactant, so that this cleaner can be said to be a cleaning sheet friendly to human and the global environment.
Accordingly, the sheet-like water-disintegratable cleaner of the present invention is useful as a cleaning sheet in wide fields such as industrial application, as well as for cleaning of household instruments such as kitchens, floors of bathrooms and toilets, further, sinks, cooking ranges, grills, toilet instruments and ventilating fans.

## Claims

1. A sheet-like water-disintegratable cleaner having a total basis weight of 10 to 250 g/m² in which a web layer (ii) having a basis weight of 5 to 200 g/m² produced by an air-laid process, which comprises 100 to 5% by weight of a powdery organic acid (a) having a hydroxyl group and a melting point of 70 to 160°C and 0 to 95% by weight of cellulosic pulp (b) (with the proviso that (a)+(b)=100% by weight) as main components, is laminated on water-disintegratable paper (i) having a basis weight of 5 to 25 g/m² comprising cellulosic pulp as a main component, and the same water-disintegratable paper (iii) as the above (i) is further laminated on the web layer (ii) as needed.

2. The sheet-like water-disintegratable cleaner according to claim 1, wherein the organic acid (a) has an average particle size of 0.1 to 1 mm.

3. The sheet-like water-disintegratable cleaner according to claim 1 or 2, wherein the organic acid (a) is at least one selected from the group consisting of malic acid, citric acid, tartaric acid, gluconolactone and a salt thereof.

4. The sheet-like water-disintegratable cleaner according to any one of claims 1 to 3, wherein the organic acid (a) has a basis weight of 1 to 50 g/m².

5. The sheet-like water-disintegratable cleaner according to any one of claims 1 to 4, wherein the web layer (ii) further contains at least one binder component (c) selected from the group consisting of the heat-adhesive synthetic fiber, polyolefinic pulp, a powder of a low-melting resin and a water-soluble resin, and the component (a) is from 5 to 50% by weight, the component (b) is from 40 to 94% by weight and the component (c) is from 1 to 10% by weight (with the proviso that (a)+(b)+(c)=100% by weight).

6. The sheet-like water-disintegratable cleaner according to claim 5, wherein the powder of the low-melting resin constituting the component (c) is at least one selected from the group consisting of polyethylene, polypropylene, a polyvinyl chloride-based resin, polyvinyl acetate, an acrylic acid ester-based resin, an ethylene-vinyl acetate copolymer, a low-melting polyester, vinylon, a low-melting polyamide and an ionomer resin.

7. The sheet-like water-disintegratable cleaner according to claim 6, wherein the water-soluble resin constituting the component (c) is at least one selected from the group consisting of polyvinyl alcohol, carboxymethylcellulose and a water-soluble derivative thereof, a water-soluble size and starch.

8. The sheet-like water-disintegratable cleaner according to any one of claims 1 to 7, wherein when used as a cleaner, the sheet-like water-disintegratable cleaner is wetted with water to use.

## Amended claims

### Amended claims under Art. 19.1 PCT

**1.** (Amended) A sheet-like water-disintegratable cleaner having a total basis weight of 10 to 250 g/m² in which a web layer (ii) having a basis weight of 5 to 200 g/m² produced by an air-laid process, which comprises 100 to 5% by weight of a powdery organic acid (a) having a hydroxyl group and a mel ting point of 70 to 160°C and 0 to 95% by weight of cellulosic pulp (b) (with the proviso that (a)+(b)=100% by weight) as main components, is laminated on water-disintegratable paper (i) having a basis weight of 5 to 25 g/m² comprising cellulosic pulp as a main component, and the same water-disintegratable paper (iii) as the above (i) is further laminated on the web layer (ii), followed by hot pressing calendering treatment.

**2.** The sheet-like water-disintegratable cleaner according to claim 1, wherein the organic acid (a) has an average particle size of 0.1 to 1 mm.

**3.** The sheet-like water-disintegratable cleaner according to claim 1 or 2, wherein the organic acid (a) is at least one selected from the group consisting of malic acid, citric acid, tartaric acid, gluconolactone and a salt thereof.

**4.** The sheet-like water-disintegratable cleaner according to any one of claims 1 to 3, wherein the organic acid (a) has a basis weight of 1 to 50 g/m².

**5.** The sheet-like water-disintegratable cleaner according to any one of claims 1 to 4, wherein the web layer (ii) further contains at least one binder component (c) selected from the group consisting of the heat-adhesive synthetic fiber, polyolefinic pulp, a powder of a low-melting resin and a water-soluble resin, and the component (a) is from 5 to 50% by weight, the component (b) is from 40 to 94% by weight and the component (c) is from 1 to 10% by weight (with the proviso that (a)+(b)+(c)=100% by weight).

**6.** The sheet-like water-disintegratable cleaner according to claim 5, wherein the powder of the low-melting resin constituting the component (c) is at least one selected from the group consisting of polyethylene, polypropylene, a polyvinyl chloride-based resin, polyvinyl acetate, an acrylic acid ester-based resin, an ethylene-vinyl acetate copolymer, a low-melting polyester, vinylon, a low-melting polyamide and an ionomer resin.

**7.** The sheet-like water-disintegratable cleaner according to claim 6, wherein the water-soluble resin constituting the component (c) is at least one selected from the group consisting of polyvinyl alcohol, carboxymethylcellulose and a water-soluble derivative thereof, a water-soluble size and starch.

**8.** The sheet-like water-disintegratable cleaner according to any one of claims 1 to 7, wherein when used as a cleaner, the sheet-like water-disintegratable cleaner is wetted with water to use.
